(19) Europäisches Patentamt
European Patent Office
Office européen des brevets

(11) Veröffentlichungsnummer: **0 173 209**
**A2**

(12) # EUROPÄISCHE PATENTANMELDUNG

(21) Anmeldenummer: **85110361.4**

(22) Anmeldetag: **19.08.85**

(51) Int. Cl.⁴: **C 08 L 53/00**, C 08 F 297/04

(30) Priorität: **31.08.84 DE 3432078**

(43) Veröffentlichungstag der Anmeldung: **05.03.86**
**Patentblatt 86/10**

(84) Benannte Vertragsstaaten: **BE DE FR GB IT NL**

(71) Anmelder: **BAYER AG, Konzernverwaltung RP**
**Patentabteilung, D-5090 Leverkusen 1 Bayerwerk (DE)**

(72) Erfinder: **Hespe, Hans, Dr., Walter-Flex-Strasse 14,**
**D-5090 Leverkusen (DE)**

(54) **Thermoplastische Elastomere.**

(57) Thermoplastische Elastomere, enthaltend 50 bis 90 Gew.-% eines Blockcopolymeren aus alternierend linear oder verzweigt angeordneten Segmenten A und B, worin A Polymerisatblöcke aus Vinylaromaten mit einer Glastemperatur $T_g > 20°C$ und B Polymerisatblöcke aus konjugierten, gegebenenfalls nachträglich hydrierten Dienen mit einer Glastemperatur $T_g < 0°C$ bedeuten und 1 bis 50 Gew.-% eines Polyphenylen-Ethers, der zu mindestens 80 Gew.-% aus Struktureinheiten der Formel

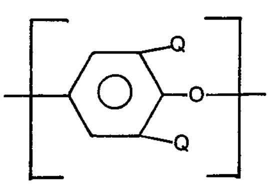

besteht, worin Q Wasserstoff, Methyl, Methoxy, Phenyl oder Halogen bedeutet, zeichnen sich durch sehr gute Gebrauchstüchtigkeit bei erhöhter Temperatur, insbesondere durch sehr gute Wärmeformbeständigkeit aus.

BAYER AKTIENGESELLSCHAFT 5090 Leverkusen, Bayerwerk
Konzernverwaltung RP Jo/by-c
Patentabteilung

## Thermoplastische Elastomere

Blockcopolymere aus alternierend linear oder verzweigt angeordneten Systemen A und B, worin A Polymerblöcke aus Vinylaromaten und B Polymerisatblöcke von konjugierten Dienen oder Blöcke aus statistischen Copolymeren von Dienen mit Vinylaromaten bedeuten, sind bekannt (Segmentpolymere). Sie besitzen thermoelastomere Eigenschaften, d.h. sie lassen sich in der Wärme thermoplastisch verformen und besitzen bei Raumtemperatur den Charakter von Elastomeren. Von Nachteil ist ihre verringerte Gebrauchstüchtigkeit bei erhöhter Temperatur, speziell ihre nicht ausreichenden Festigkeitseigenschaften.

Es hat nicht an Versuchen gefehlt, diese Nachteile durch Abmischung mit höher schmelzenden Komponenten zu beseitigen:
In DE-OS 2 643 757 wird die Modifizierung von Segmentpolymeren, der obengenannten Art durch aromatische Polycarbonate beschrieben, deren lineare Ketten zu mindestens 50 % aus Struktureinheiten der Formel

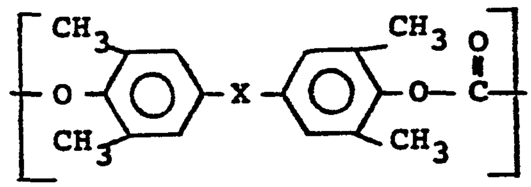

bestehen, wobei X Alkylen oder Alkyliden ist. Derartige Mischungen liefern thermoplastische Elastomere mit verbesserter Gebrauchstüchtigkeit bei erhöhter Temperatur.

Allerdings ist die Wärmeformbeständigkeit für eine Reihe von Anwendungsgebieten noch nicht ausreichend.

Es wurde nun gefunden, daß sich diese Nachteile vermeiden lassen, wenn man die obengenannten Segmentpolymere mit Polyphenylenethern abmischt. Die Mischungen stellen thermoplastische Elastomere dar, die eine erhöhte Erweichungstemperatur und verbesserte Festigkeitseigenschaften ohne wesentliche Einbußen in der Bruchdehnung und im reversiblen Rückstellvermögen aufweisen.

Gegenstand dieser Erfindung sind Mischungen aus 50 bis 99 Gew.-% eines Blockcopolymeren aus alternierend linear oder verzweigt angeordneten Segmenten A und B, worin A Polymerisatblöcke bedeuten, die überwiegend aus Vinylaromaten bestehen und eine Glastemperatur $T_g > 20°C$ besitzen und B Polymerisatblöcke überwiegend aus konjugierten, gegebenenfalls nachträglich hydrierten Dienen bedeuten, deren Glastemperatur $T_g < 0°C$ beträgt und

1 bis 50 Gew.-% eines Polyphenylen-Ethers, der zu mindestens 80 Gew.-% aus Struktureinheiten der Formel

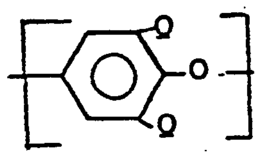

besteht, wobei Q Wasserstoff, Methyl, Methoxy, Phenyl oder Halogen bedeutet. Besonders bevorzugt sind Polyether mit Q = $CH_3$.

Die zur Herstellung der Polymermischungen benötigten Segmentcopolymere können nach verschiedenen bekannten Verfahren hergestellt werden:

Nach der DE-OS 1 940 278 lassen sich beispielsweise lebende Blockpolymere vom Typ $A\text{-}B^{\ominus}\text{-}Li^{\oplus}$ durch Kopplung mit Carbonsäureestern in Segment-Polymere vom Typ A-B'-A umwandeln. Hierin bedeutet A einen Polystyrolblock, B einen Polydienblock und Li Lithium, B' besitzt das doppelte Molekulargewicht von B. Die DE-OS 1 645 298 beschreibt ein Verfahren in drei Stufen, wonach zunächst Styrol mit Lithiumalkylen zu einem lebenden Polystyrolblock polymerisiert wird, anschließend wird Butadien zugegeben und nach dessen Polymerisation nochmals Styrol, so daß ein Segment-Polymer der Struktur A-B-A resultiert. Bei Wiederholung der Monomerenzugabe können vielsegmentige Produkte erhalten werden. Nach der DE-AS 1 520 543 werden lebende

Diblockpolymere der Struktur A-B-Li mit polyfunktionellen Kopplern wie Polyepoxiden oder Polyaziridinylverbindungen gekoppelt zu Segment-Polymeren der Struktur $(A-B)_nK$, wobei K das Kopplermolekül und n seine Funktionalität bedeuten. Nach der DE-AS 1 905 422 kann die Kopplung von lebenden Diblockpolymeren mit Diestern erfolgen. Ferner kann man Blockpolymere ausgehend von polyfunktionellen Lithiumverbindungen herstellen. Diese erhält man beispielsweise aus Lithiummetall und Naphthalin und anschließender Umsetzung mit Styrol. Bekannt sind Poly-Li-Verbindungen, hergestellt aus Lithiumalkylen und Divinylbenzol, die bis zu 50 funktionelle Gruppen tragen können. Die geeignet gesteuerte Umsetzung solcher polyfunktioneller Lithiumverbindungen führt zu sternförmigen Segmentpolymeren. Nach der DT-OS 2 504 118 werden Segmentpolymere durch stufenweise Zugabe von a) Styrol, b) Styrol/Diengemisch und c) wieder Styrol in Gegenwart von Lithiumalkyl und einer polaren Verbindung hergestellt, wobei der mittlere Block als elastomeres statistisches Copolymer aus Dien und Styrol ausgebildet ist.

Die zur Herstellung der Hartsegmente A verwendeten Monomeren können Styrol, Vinylnaphthalin, α-Methylstyrol und andere Alkylstyrole sein. Vorzugsweise wird Styrol verwendet. Monomere zur Herstellung der elastischen Segmente sind konjugierte Diene wie 1,3-Butadien, Isopren, Piperylen, wobei zur Herstellung der elastomeren Segmente, die als statistische Copolymere vorliegen, neben Butadien und Isopren insbesondere Styrol als Comonomer verwendet werden kann.

Das Molgewicht der Hartsegmente A kann 5000 bis 250000, vorzugsweise 10000 bis 50000, das Molgewicht der elastomeren Weichsegmente B kann 10000 bis 500000, vorzugsweise 20000 bis 80000 betragen, bestimmt nach Chromatographic Sci. Ser. 19 (1981) 29-77; J. Macromol. Sci. Part A Chemistry A 20 (1983) 733-751; Kautschuk und Gummi, Kunststoffe 22 (1969) 691.

Der prozentuale Anteil der Hartkomponente im Segmentpolymeren hängt von den gewünschten Eigenschaften der Polymermischung ab.

Zur Verbesserung des Eigenschaftsbildes von thermoplastischen Segmentpolymeren, insbesondere zur Erhöhung der Gebrauchstemperatur, sind Hartsegmentanteile A im Bereich von 10 bis 60 Gew.-% erforderlich. Bevorzugt sind Produkte mit 15 bis 50 Gew.-%.

Die aus dem Butadien stammenden restlichen Doppelbindungen werden gegebenenfalls ganz oder teilweise nach bekannten Verfahren hydriert.

Auch die Polyphenylenether sind bekannt (z. B. US-PS 3 306 874, 3 306 875, 3 257 357, 3 257 358). Vorzugsweise kommen Poly(2,6-dichlor-1,4-phenylen)ether, Poly (2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether in Frage. Bevorzugt wird der Poly(2,6-dimethyl-1,4-phenylen)ether eingesetzt, insbesonders mit einer Grenzviskosität von 0,3 bis 0,8 dl/g, besonders bevorzugt von 0,45 und 0,65 dl/g (gemessen in Chloroform bei 30°C).

Die Polyphenylenether können z.B. in Gegenwart von komplexbildenden Mitteln wie Kupferbromid und sek.-Dibutylamin aus den Phenolen hergestellt werden.

Die Polyphenylenether weisen Molekulargewichte von 5000 bis 30000, bevorzugt 10000 bis 25000, bestimmt nach der in "Macromolekular Syntheses" 1 (1978), Seite 83 beschriebenen Methode, auf.

Bevorzugte thermoplastische Kautschuke bestehen aus 10 bis 35 Gew.-% des Polyphenylen-Ethers und 90 bis 65 Gew.-% des Segmentpolymerisats.

Die Herstellung der Polyether/Segmentpolymermischungen kann durch Zusammenfügen von Lösungen der Einzelkomponenten oder durch Vereinigung der reinen Komponenten erfolgen. Aus den erhaltenen Lösungen läßt sich die Polymermischung durch einen Strippprozeß isolieren, indem man gleichzeitig Wasserdampf und Lösung in heißes Wasser einführt. Hierbei fällt die Polymermischung in Form von Krümeln an, die nach Abtrennen des Wassers getrocknet werden. Man kann das Polymer aus der Lösung auch in Ausdampfschnecken direkt vom Lösungsmittel befreien. Die Herstellung von Mischungen ohne Lösungsmittel kann bei erhöhter Temperatur in geeigneten Aggregaten wie Walzenstühlen oder Knetern erfolgen.

Die erfindungsgemäß hergestellten Mischungen können durch Zusatz von bekannten Zuschlagstoffen modifiziert werden. So kann man beispielsweise Polystyrole, Polymethylmethacrylat oder Styrol-Acrylnitrilcopolymere zumischen.

Weiter sind Mischungen mit Füllstoffen wie Kieselsäuren verschiedener Herkunft, Silikaten und andere Mineralien, Holzmehl, Ruß oder Glasfasern, mit Effektstoffen, Farbstoffen, Pigmenten, Thermo-, Oxidations-, UV- und anderen Stabilisatoren, Weichmachern, Gleitmitteln, Entformungshilfsmitteln, flammfest machenden Zusätzen, wie halogenierten organischen Verbindungen, Metalloxiden, Metallsalzen und organischen Phosphaten, möglich.

Durch Zusatz von Ölen können die Mischungen weicher eingestellt werden. Man kann aliphatische, naphthenische oder aromatische Öle einsetzen. Auch die Verwendung von Polyolefinölen und Polydiolefinölen ist möglich. Ferner kann man höhersiedende aliphatische, araliphatische und aromatische Ester verwenden.

Die Stabilisierung der Mischungen kann mit üblichen Kautschukstabilisatoren erfolgen, beispielsweise vom Typ der alkylierten ein- oder mehrkernigen Phenole oder der Thioether von alkylierten Phenolen. Auch ist der Zusatz von synergistisch wirkenden Verbindungen, beispielsweise vom Typ der Thiobisalkansäureester und der Alkylphenylphosphite möglich.

Die Polymermischungen können zur Herstellung technischer Gummiartikel wie Schuhsohlen, Schläuche und Dichtungen verwendet werden.

**Beispiel 1**

**Herstellen der Mischung:**

21 kg Chlorbenzol werden unter Rühren mit
5,033 kg eines Styrol-Butadien-Styrol-Blockcopolymeren (A) mit einem Styrolgehalt von 27 Gew.-% (verwendet wurde Cariflex TR 1102 der Firma Shell) und
0,755 kg Poly (2,6-dimethyl-1,4-phenylen)ether (B) (rel. Viskosität in $CHCl_3$ bei 30°C: 0,4 dl/g) versetzt.

Nach 6 Stunden Rühren bei Raumtemperatur wurde die entstandene homogene Lösung mit Hilfe eines Entgasungsextruders entgast.

Die Manteltemperatur beträgt dabei 180°C bis 200°C, die Entgasung erfolgt bei einem Vakuum von 50 bis 100 mbar. Pro Stunde werden 15 kg der einzudampfenden Lösung in den Extruder gefördert.

Die Polymermischung wird als hellgelber Strang an der Düse des Extruders abgezogen.

Die Produkte wurden bei 180°C in einer Heizpresse zu Platten verpreßt. Aus diesen Platten wurden Probekörper zur Messung des dynamischen komplexen Schubmoduls G (T) und der Zug-Dehnungskurve $\sigma = f(\varepsilon)$ ausgestanzt. Die Messung des Schubmoduls erfolgte in Anlehnung an DIN 53443, der Zugversuch am Normstab S 2 gemäß DIN 53504. Die wesentlichen Ergebnisse sind in nachfolgender Tabelle vergleichend zusammengefaßt:

| | A | Mischung aus A und B 13/87 Gew.-Tle |
|---|---|---|
| $T_g$ (HS) (°C) | 80 | 112 |
| $T_g$ (WS) (°C) | -91 | -91 |
| $G'_{20}$ ($N/mm^2$) | 12 | 180 |
| HDT (°C) | 86 | 112 |
| $\sigma_B$ ($N/mm^2$) | 23 | 32,5 |
| $\varepsilon_R$ (%) | 920 | 740 |

Die Glastemperaturen ($T_g$) der Hart- und Weichphasen des SBS-Blockcopolymeren und der erfindungsgemäßen Mischung wurden in Anlehnung an DIN 53445 als Temperaturlagen der zugehörigen Verlustmodulmaxima bestimmt. Auch der Speichermodul G' wurde bei T = 20°C aus diesen Kurven abgelesen.

Die Erweichungstemperaturen (HDT) wurden mittels thermomechanischer Analyse bestimmt:

Gerät TMS-1, Perkin-Elmer, Penetration Mode, Stempeldurchmesser 1 mm, Last 20 pond, Auswertung der HDT nach der Tangentenschnitt-Methode.

Die Bestimmung der Zugestigkeit $\sigma_B$ und der Reißdehnund $\varepsilon_R$ erfolgte nach DIN 53 504.

Ein wesentliches Ergebnis der Messungen ist der Befund, daß die thermoplastische Erweichung des erfindungsgemäßen thermoplastischen Elastomeren gegenüber dem SBS-Blockcopolymeren um 26 Grad höher liegt.

Die überlegenen Festigkeitseigenschaften des erfindungsgemäßen thermoplastischen Elastomeren gegenüber dem Stand der Technik ergeben sich aus Tab. 2. Keines der in DE-OS 2643 757 angegebenen Beispiele zeigt die Kombination von hoher Zugfestigkeit und großer Reißdehnung wie die erfindungsgemäße Substanz.

Tabelle 2

| | $\sigma_B$/ (MPa) | $\varepsilon_R$/ (%) |
|---|---|---|
| erfindungsgemäßes TPE nach Beispiel 1 | 32,5 | 740 |
| Beispiel 1 (aus DE-OS 2643 757) | 14 | 315 |
| | 17,4 | 185 |
| Beispiel 2 (aus DE-OS 2643 757) | 15 | 280 |
| | 20,4 | 280 |

Beispiel 2

In einer gleichsinnig rotierenden, selbstreinigenden 32 mm-Schneckenmaschine wurden die festen Ausgangsverbindungen durch ein offenes Gehäuseteil eingezogen und in einer Aufschmelzzone bei 190 °C aufgeschmolzen und verdichtet. Über einen Einfüllstutzen wurde mit einer Kolbendosierpumpe Toluol, 20 Gew.-%, bezogen auf Polymere, in die Schmelze mit 30 bar eingedrückt.

Es folgten abwechselnd 7 Knet- und 7 Förderzonen, schließlich eine Kompressionszone. Das Toluol wurde im folgenden Entgasungsteil im Vakuum bei 80 mbar abgezogen und die homogene Schmelze durch eine 5 mm Düse zu einem Strang extrudiert, der an der Luft abgekühlt und granuliert wurde. Die Manteltemperatur der gesamten Schneckenmaschine wurde auf 190 °C gehalten.

90 Vol-% des abgezogenen und kondensierten Toluols wurden, mit 10 Vol-% frischem Toluol gemischt hinter der Aufschmelzzone erneut eindosiert. Die restlichen 10 Vol-% Toluol wurden kontinuierlich ausgeschleust.

Die Produkte wurden bei 180 °C in einer Heizpresse zu Platten verpreßt. Aus diesen Platten wurden Probekörper zur Messung des dynamischen komplexen Schubmoduls G (T) und der Zug-Dehnungskurve $\sigma = f(\varepsilon)$ ausgestanzt. Die Messung des Schubmoduls erfolgte in Anlehnung an DIN 53 443, der Zugversuch am Normstab S 2 gemäß DIN 53 504. Die wesentlichen Ergebnisse sind in nachfolgender Tabelle 3 zusammengefaßt:

Die Elastomerblends enthielten Styrol-Butadien-Styrol-Blockcopolymere (SBS) und den Polyphenylenether gemäß Beispiel 1 (PPO)

| Blend | SBS-Typ | Zusammensetzung SBS/PPO (Gew.-%) |
|---|---|---|
| A | 28 Gew.-% Styrol | 87 : 13 |
| B | 27 Gew.-% Styrol | 87 : 13 |
| C | hydriertes SBS, 14 Gew.-% Styrol | 83,4 : 16,6 |
| D | hydriertes SBS, 14 Gew.-% Styrol | 90,9 : 9,1 |
| E | hydriertes SBS, 14 Gew.-% Styrol | 100 : 0 |
| F | hydriertes SBS, 28 Gew.-% Styrol | 83,4 : 16,6 |
| G | hydriertes SBS, 28 Gew.-% Styrol | 100 : 0 |

Tabelle 3

| Blend | $T_g$ (HS) [°C] | $T_g$ (WS) [°C] | $G'_{20}$ [N/mm²] | HDT [°C] | $\sigma_B$ [N/mm²] | $\varepsilon_B$ [%] |
|---|---|---|---|---|---|---|
| A | 101 | -92 | 80 | 110 | 15 | 900 |
| B | 97 | -92 | 27 | 104 | 8 | 690 |
| C | 100 | -57 | 3,5 | 98 | 27,2 | 660 |
| D | 90 | -56 | 3,5 | 86 | 22,5 | 670 |
| E | 69 | -57 | 1,3 | nicht gemessen | 17,2 | 735 |
| F | 97 | -49 | 40 | 90 | 34,0 | 430 |
| G | 70 | -52 | 6 | nicht gemessen | 28,0 | 500 |

Patentansprüche

1. Thermoplastische Elastomere enthaltend 50 bis 99 Gew.-% eines Blockcopolymeren aus alternierend linear oder verzweigt angeordneten Segmenten A und B, worin A Polymerisatblöcke aus Vinylaromaten mit einer Glastemperatur $T_g > 20°C$ und B Polymerisatblöcke aus konjugierten, gegebenenfalls nachträglich hydrierten Dienen mit einer Glastemperatur $T_g < 0°C$ bedeuten und 1 bis 50 Gew.-% eines Polyphenylen-Ethers, der zu mindestens 80 Gew.-% aus Struktureinheiten der Formel

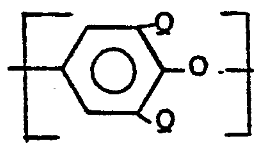

besteht, worin Q Wasserstoff, Methyl, Methoxy, Phenyl oder Halogen bedeutet.

2. Thermoplastische Elastomere nach Anspruch 1, worin das Molgewicht der Hartsegmente A 5000 bis 250000 und der Weichsegmente B 10000 bis 500000 beträgt.

3. Thermoplastische Elastomere nach Anspruch 1, worin die Hartsegmente A 10 bis 60 Gew.-% des Segmentpolymerisates ausmachen.

4. Thermoplastische Elastomere nach Anspruch 1, worin Poly-(2,6-dimethyl-1,4-phenylen)-ether verwendet wird.

5. Thermoplastische Elastomere nach Anspruch 1, aus 90 bis 65 Gew.-% des Segmentpolymerisates und 10 bis 35 Gew.-% des Polyphenylenethers.

6. Thermoplastische Elastomere nach Anspruch 1, worin die Komponente B des Blockcopolymeren sternförmig verzweigt und die Komponente A endständig angeordnet ist.

7. Thermoplastische Elastomere nach Anspruch 4, worin Poly-(2,6-dimethyl-1,4-phenylen)-ether eine Grenzviskosität von 0,3 bis 0,8 dl/g ($CHCl_3$/30°C) hat.